(19) Europäisches Patentamt / European Patent Office / Office européen des brevets

(11) **EP 3 393 030 B1**

(12) **EUROPEAN PATENT SPECIFICATION**

(45) Date of publication and mention
of the grant of the patent:
**07.10.2020 Bulletin 2020/41**

(21) Application number: **17842648.2**

(22) Date of filing: **22.05.2017**

(51) Int Cl.:
*H02M 3/155* (2006.01)    *H02M 1/14* (2006.01)
*H02M 3/158* (2006.01)    *H02M 7/483* (2007.01)

(86) International application number:
**PCT/CN2017/085264**

(87) International publication number:
**WO 2018/036223 (01.03.2018 Gazette 2018/09)**

(54) **DC-DC CONVERSION SYSTEM AND CONTROL METHOD THEREFOR**

GLEICHSTROMUMWANDLUNGSSYSTEM UND STEUERUNGSVERFAHREN DAFÜR

SYSTÈME DE CONVERSION CC/CC ET SON PROCÉDÉ DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.08.2016 CN 201610739433**

(43) Date of publication of application:
**24.10.2018 Bulletin 2018/43**

(73) Proprietors:
• **GLOBAL ENERGY INTERCONNECTION
RESEARCH
INSTITUTE CO., LTD.
Beijing 102211 (CN)**
• **State Grid Corporation of China
Beijing 100031 (CN)**

(72) Inventors:
• **TANG, Guangfu
Beijing 102211 (CN)**
• **HE, Zhiyuan
Beijing 102211 (CN)**
• **WANG, Xinying
Beijing 102211 (CN)**
• **WEI, Xiaoguang
Beijing 102211 (CN)**
• **PANG, Hui
Beijing 102211 (CN)**
• **ZHANG, Sheng
Beijing 102211 (CN)**
• **WANG, Chenghao
Beijing 102211 (CN)**
• **GAO, Yang
Beijing 102211 (CN)**
• **KE, Jinkun
Beijing 102211 (CN)**
• **YANG, Bingjian
Beijing 102211 (CN)**
• **ZHOU, Wandi
Beijing 102211 (CN)**
• **ZHANG, Ning
Beijing 102211 (CN)**
• **LIU, Yuan
Beijing 102211 (CN)**
• **DING, Xiao
Beijing 102211 (CN)**

(74) Representative: **V.O.**
**P.O. Box 87930**
**Carnegieplein 5**
**2508 DH Den Haag (NL)**

(56) References cited:
EP-A1- 2 975 721          WO-A1-2013/017160
WO-A1-2016/029824    CN-A- 101 295 925
CN-A- 101 814 827        CN-A- 103 797 698
CN-A- 105 340 165        CN-A- 105 375 757
US-A1- 2005 111 245

EP 3 393 030 B1

**Description**

**TECHNICAL FIELD**

The invention relates to the technical field of power electronic conversion, and particularly to a Direct Current (DC)-DC conversion system and a control method thereof. It is noted that related technologies are known from WO2013/017160A1 and WO2016/029824A1.

**BACKGROUND**

Along with development of power electronic devices, a power electronic technology-based DC-DC conversion system is applied more and more widely. A current DC-DC conversion system mainly includes an indirect conversion type DC/Alternating Current (AC)/DC conversion system and a direct conversion type DC/DC conversion system.

1. The indirect conversion type DC/AC/DC conversion system

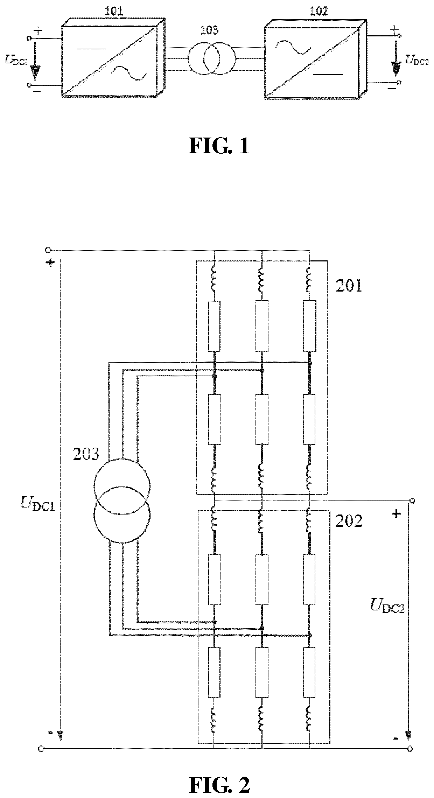

The DC conversion system includes an AC link, and its typical topology is a transformer-based isolated DC/DC converter topology shown in FIG. 1, which includes a DC input end $U_{DC1}$, Voltage Source Converter (VSC) 101, middle frequency transformer 103, VSC 102 and DC output end $U_{DC2}$ which are sequentially connected. The VSC 101 converts the DC input voltage $U_{DC1}$ into the AC voltage, the VSC 102 converts the AC voltage into DC output voltage $U_{DC2}$, and the middle frequency transformer 102 performs AC voltage conversion.
When being applied to the field of high-voltage high-capacity DC power transmission, the indirect conversion type DC/AC/DC conversion system has the shortcomings of low utilization rate, high loss of the middle frequency transformer, great difficulty in manufacturing of AC transformer and the like.

2. The direct conversion type DC/DC conversion system

When being applied to the field of high-voltage high-capacity DC power transmission, the direct conversion type DC/DC conversion system mainly includes an auto-transformer based DC-Modular Multilevel Converter (MMC) topology (MMC-AT) and a voltage division type DC-MMC topology.
FIG. 2 is a schematic diagram of a MMC-AT topology. As shown in the figure, the MMC-AT topology includes a VSC 201, a VSC 202 and an isolated AC transformer 203. The VSC 201 and the VSC 202 are connected in series to bear a voltage of a high-voltage side of a DC power transmission system together. The isolated transformer 203 is configured to balance energy between the VSC 201 and the VSC 202, but the isolated transformer 203 may limit frequencies and active power of AC voltages output by the VSCs.

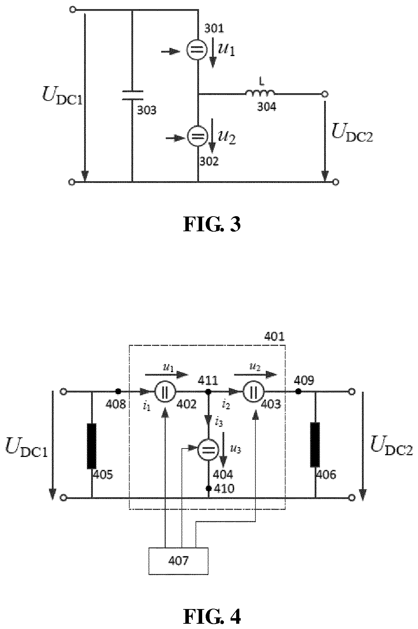

FIG. 3 is a schematic diagram of a voltage division type DC-MMC topology. As shown in the figure, the voltage division type DC-MMC topology includes a controllable voltage source 301, a controllable voltage source 302, a capacitor 303 and an inductor 304. It mainly reallocates energy of the two controllable voltage sources by internal controls between controllable voltage source 301 and 302, thereby implementing DC conversion. The inductor 304 is configured to filter harmonic conversion components in an output voltage and an output current. However, during application to the field of high-voltage high-capacity DC power transmission, an inductor with relatively higher inductance is required to be adopted, which may limit transmitted power and running efficiency of the voltage division type DC-MMC topology.

**SUMMARY**

In order to overcome the shortcomings of the above topologies, the invention provides a DC-DC conversion system and a control method thereof, which may be applied to the field of high-voltage high-capacity DC power transmission with fewer devices.
The features of the method and system according to the present disclosure are defined in the independent claims.
In a first aspect, the technical solution of a DC-DC conversion system in the invention is as follows.
The system includes a phase element and a controller. The phase element includes multiple bridge arms in star connection. Each bridge arm includes a variable voltage source and an output terminal. The multiple variable voltage sources are in star connection and form a common terminal, and the other ends are output terminals. The controller is connected to each variable voltage source, and is configured to control a voltage of each variable voltage source.
In a second aspect, the technical solution of a control method for a DC-DC conversion system in the invention is as follows.
The DC-DC conversion system includes a phase element. The phase element includes multiple bridge arms in star connection. Each bridge arm includes a variable voltage source and an output terminal. The multiple variable voltage sources are in star connection and form a common terminal, and the other ends are output terminals. The output terminal of the ith bridge arm and output terminal of the (N+1)th bridge arm of the phase element form an ith-side port of the system, i=1,2,...,N.

The variable voltage sources output DC voltage components and AC voltage components, and the control method includes that:

when the ith-side port is determined as an input side of the system, the variable voltage sources in both the ith bridge arm and the (N+1)th bridge arm are controlled to output DC voltage components, and a sum of the two DC voltage components is determined as an input-side DC voltage of the system;

when the ith-side port is determined as an output side of the system, the variable voltage sources in the ith bridge arm and the (N+1)th bridge arm are controlled to output DC voltage components, and a sum of the two DC voltage components is determined as an output-side DC voltage of the system, the DC voltage component output by the variable voltage source in the (N+1)th bridge arm is a fixed value, and the DC voltage component output by the variable voltage source in the ith bridge arm is regulated to change a magnitude of the output-side DC voltage; anda phase and amplitude of each AC voltage component output by each variable voltage source are controlled so as to perform energy balance on N+1 bridge arms.

Compared with the closest conventional art, the invention has the following beneficial effects.

1. Each of the bridge arms of the phase element of the DC-DC conversion system provided by the invention forms star connection, so that a circulation current for energy balance only circulates in the system, rather than flowing into a DC system. In addition, the system adopts relatively smaller numbers of power electronic devices and filters, so that the system may be applied to the field of high-voltage high-capacity DC power transmission and may reduce limits of inductive devices to DC power transmission of the DC-DC conversion system.

2. According to the control method for the DC-DC conversion system provided by the invention, each variable power source in each bridge arm on the input side of the system is controlled to output the fixed DC voltage component, thereby keeping the input-side DC voltage of the system constant. Each variable voltage source in each bridge arm on the output side of the system is controlled to output the DC voltage component to meet DC voltage values required by different practical working conditions, and the system is easy to operate.

## BRIEF DESCRIPTION OF DRAWINGS

FIG. 1 is a schematic diagram of a transformer-based isolated DC/DC converter.
FIG. 2 is a schematic diagram of an auto-transformer based DC-MMC topology.
FIG. 3 is a schematic diagram of a voltage division type DC-MMC topology.
FIG. 4 is a first topological diagram of a DC-DC conversion system according to an embodiment of the invention.
FIG. 5 is a second topological diagram of a DC-DC conversion system according to an embodiment of the invention.
FIG. 6 is a third topological diagram of a DC-DC conversion system according to an embodiment of the invention.

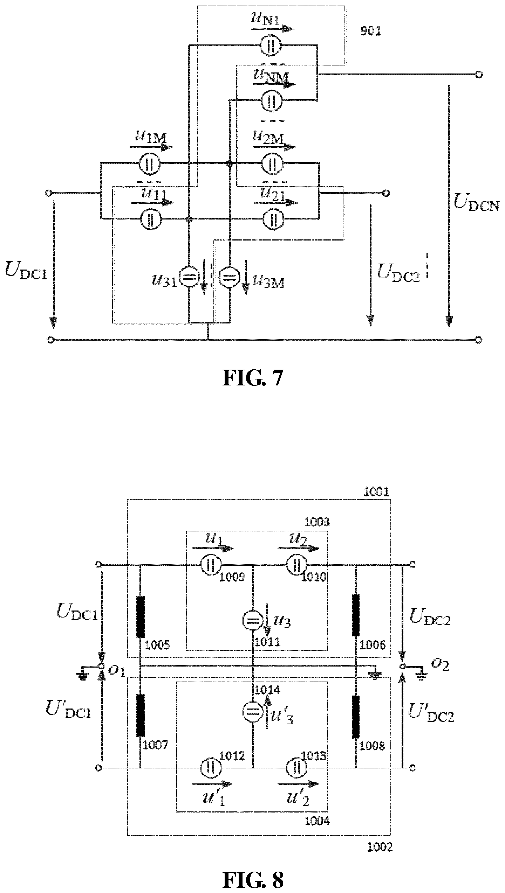

FIG. 7 is a fourth topological diagram of a DC-DC conversion system according to an embodiment of the invention.
FIG. 8 is a fifth topological diagram of a DC-DC conversion system according to an embodiment of the invention.
FIG. 9 is a sixth topological diagram of a DC-DC conversion system according to an embodiment of the invention.
FIG. 10 is a diagram of a single-phase DC equivalent circuit according to an embodiment of the invention.
FIG. 11 is a diagram of a single-phase AC equivalent circuit according to an embodiment of the invention.
FIG. 12 is a topological diagram of a variable voltage source according to an embodiment of the invention.
FIG. 13 is a topological diagram of a half-bridge type submodule.
FIG. 14 is a topological diagram of a full-bridge type submodule.
FIG. 15 is a topological diagram of a hybrid submodule.
FIG. 16 is a topological diagram of an asymmetric submodule.
FIG. 17 is a topological diagram of an interleaved submodule.
FIG. 18 is another topological diagram of an interleaved submodule.
FIG. 19 is a topological diagram of a clamping submodule.
FIG. 20 is a topological diagram of a flying capacitor type submodule.
FIG. 21 is a topological diagram of a three-level submodule.
FIG. 22 is another topological diagram of a three-level submodule.

101: VSC; 102: VSC; 103: middle frequency transformer; 201: VSC; 202: VSC; 203: isolated transformer; 301:

controllable voltage source; 302: controllable voltage source; 303: capacitor; 304: inductor; 401: phase element; 402: variable voltage source of first bridge arm; 403: variable voltage source of second bridge arm; 404: variable voltage source of third bridge arm; 405: first filter; 406: second filter; 407: controller; 408: output terminal of first bridge arm; 409: output terminal of second bridge arm; 410: output terminal of third bridge arm; 411: common terminal; 501: phase element; 502: variable voltage source of first bridge arm; 503: variable voltage source of second bridge arm; 504: variable voltage source of third bridge arm; 801: phase element; 505: output terminal of first bridge arm; 506: output terminal of second bridge arm; 507: output terminal of third bridge arm; 508: common terminal; 901: phase element; 1001: single-phase DC-DC conversion system; 1002: another single-phase DC-DC conversion system; 1003: phase element; 1004: phase element; 1005: first filter; 1006: second filter; 1007: first filter; 1008: second filter; 1009: variable voltage source; 1010: variable voltage source; 1011: variable voltage source; 1012: variable voltage source; 1013: variable voltage source; 1014: variable voltage source; 1101: multi-phase DC-DC conversion system; 1102: another multi-phase DC-DC conversion system; 1103: phase element; 1104: phase element; 1105: variable voltage source; 1106: variable voltage source; 1107: variable voltage source; 1108: variable voltage source; 1109: variable voltage source; 1110: variable voltage source; 1201: variable voltage source; 1202: inductor; and 1203: power module unit.

## DETAILED DESCRIPTION

In order to make the purpose, technical solutions and advantages of embodiments of the invention clearer, the technical solutions in the embodiments of the invention will be clearly and completely described below in combination with the drawings in the embodiments of the invention. Apparently, the described embodiments are not all embodiments but part of embodiments of the invention. All other embodiments obtained by those skilled in the art on the basis of the embodiments of the invention without creative work fall within the scope of protection of the invention.

A DC-DC conversion system provided by an embodiment of the invention will be described below in combination with the drawings.

The DC-DC conversion system in the embodiment includes a phase element and a controller.

The phase element includes multiple bridge arms in star connection. Each bridge arm includes a variable voltage source and an output terminal. The multiple variable voltage sources are in star connection and form a common terminal, and the other ends are output terminals.

The controller is connected to each variable voltage source, and is configured to control a voltage of each variable voltage source.

The bridge arms of the phase element in the embodiment form star connection, so that circulation current for energy balance only circulates in the system, and does not flow into a DC system.

Furthermore, the DC-DC conversion system in the embodiment further includes the following structure.

The system in the embodiment further includes a filter, and the filter is connected between the output terminal of the ith bridge arm and the output terminal of the (N+1)th bridge arm respectively, i=1,2,3...,N and N+1 being a total number of the bridge arms. The output terminal of the ith bridge arm and the output terminal of the (N+1)th bridge arm form an ith-side port of the system, and a sum of DC voltage components output by the variable voltage sources in the ith bridge arm and the (N+1)th bridge arm is a DC voltage of the ith-side port.

The phase element and the multiple filters form an AC circular current path, each variable voltage source outputs an AC voltage component, and energy exchange among variable voltage sources is implemented through the AC circular current path.

1. The controller controls the voltages of the variable voltage sources in the ith bridge arm and the (N+1)th bridge arm to regulate the DC voltage of the ith-side port. Regulation of the DC voltage will described in the embodiment with a phase element including three bridge arms as an example, specifically as follows.

FIG. 4 is a first topological diagram of a DC-DC conversion system according to an embodiment of the invention. As shown in the figure, the DC-DC conversion system in the embodiment includes a phase element 401, a first filter 405, a second filter 406 and a controller 407.

A first bridge arm of the phase element 401 includes a variable voltage source 402 and an output terminal 408, a second bridge arm includes a variable voltage source 403 and an output terminal 409, and a third bridge arm includes a variable voltage source 404 and an output terminal 410. That is, the variable voltage source 402, the variable voltage source 403 and the variable voltage source 404 are in star connection, and form a common terminal 411. A front end of the variable voltage source 402 is connected to the output terminal 408, and a tail end is connected to the common terminal 411. A front end of the variable voltage source 403 is connected to the output terminal 409, and a tail end is connected to the common terminal 411. A front end of the variable voltage source 404 is connected to the output terminal 410, and a tail end is connected to the common terminal 411.

(1) The output terminal 408 and the output terminal 410 form an input side of the system.

The variable voltage source 402 and the variable voltage source 404 are controlled to output fixed DC voltage components, and a sum of the two DC voltage components is an input-side DC voltage of the system.

(2) The output terminal 409 and the output terminal 410 form an output side of the system.

The variable voltage source 403 and the variable voltage source 404 are controlled to output DC voltage components, and a sum of the two DC voltage components is an output-side DC voltage of the system. The DC voltage component output by the variable voltage source 404 is a fixed value, and the DC voltage component output by the variable voltage source 403 is regulated to change a magnitude of the output-side DC voltage. In the embodiment, Proportion Integration (PI) regulation may be performed on a DC voltage component output by the variable voltage source in the ith bridge arm, and an output-side DC voltage meeting a requirement of a practical working condition may further be obtained.

2. The controller controls the DC voltage component of each variable voltage source to implement transmission of DC power. DC power transmission of a DC-DC conversion system topology shown in FIG. 4 will be described in the embodiment, specifically as follows.

As shown in the figure, $U_{DC1}$ is a high-voltage side, and $U_{DC2}$ is a low-voltage side. Considering that energy is transmitted from the high-voltage side to the low-voltage side, a DC of the first bridge arm is lower than a DC of the second bridge arm. Furthermore, it is obtained from Kirchhoff's Circuit Laws (KCL) that a current of the third bridge arm is negative. Therefore, the first bridge arm absorbs DC power, the second bridge arm absorbs DC power, and the third bridge arm sends out DC power. This may cause that the first and second bridge arms continue absorbing the DC power to be worn and the third bridge arm continue sending out the DC power so as not to work.

3. The controller controls the AC voltage component of each variable voltage source to implement energy balance among the bridge arms. DC power transmission of the DC-DC conversion system topology shown in FIG. 4 will be described in the embodiment, specifically as follows.

In order to ensure normal work of each bridge arm, i.e. energy balance among the bridge arms, it is necessary to transmit the DC power absorbed by the first bridge arm and the second bridge arm to the third bridge arm. The bridge arms with leading AC voltage phases transmit energy to the bridge arms with lagged phases, so that an amplitude and phase of the AC voltage component of each bridge arm may be controlled for energy exchange.

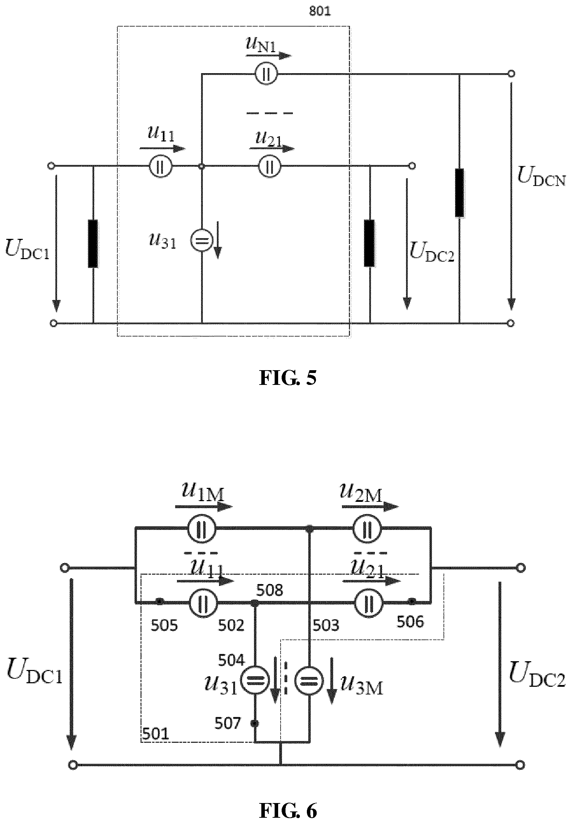

FIG. 5 is a second topological diagram of a DC-DC conversion system according to an embodiment of the invention. As shown in the figure, the system in the embodiment includes a phase element 801 and N filters.

The phase element 801 includes N+1 bridge arms, and each bridge arm includes a variable voltage source and an output terminal. The ith bridge arm includes the variable voltage source i and the output terminal i, i=1, 2, ..., N. The N+1 variable voltage sources are in star connection and form a common terminal, a front end of the variable voltage source is connected to the output terminal i, and a tail end of the variable voltage source i is connected to the common terminal.

The N filters are sequentially connected between the output terminal of the ith bridge arm and the output terminal of the (N+1)th bridge arm. That is, the first filter is connected between the output terminal of the first bridge arm and the output terminal of the (N+1)th bridge arm, the second filter is connected between the output terminal of the second bridge arm and the output terminal of the (N+1)th bridge arm, the third filter is connected between the output terminal of the third bridge arm and the output terminal of the (N+1)th bridge arm. The same connecting manner is adopted for the other filters, and will not be elaborated.

As shown in the figure, in the embodiment, a sum of DC voltage components output by the variable voltage source $u_{11}$ and $u_{31}$ is a DC voltage of a first-side port $U_{DC1}$; a sum of DC voltage components output by the variable voltage source $u_{21}$ and the variable voltage source $u_{31}$ is a DC voltage of a second-side port $U_{DC2}$; and a sum of DC voltage components output by the variable voltage source $u_{N1}$ and the variable voltage source $u_{31}$ is the DC voltage of the second-side port $U_{DCN}$. Meanwhile, the phase element 801 and the N filters may form an AC circular current path, and AC voltage components output by the N+1 variable voltage sources are transmitted through the AC circular current path to implement energy exchange among variable voltage sources.

In the embodiment, the variable voltage sources output the AC voltage components and DC voltage components, so that the current may flow bidirectionally, thereby flexibly controlling the current direction of the DC-DC conversion system. In addition, in the embodiment, the number of the bridge arms in the phase element may be flexibly set, so that the DC-DC conversion system may meet application requirements of different voltage levels and voltage transformation ratios.

Furthermore, the phase element in the embodiment further includes the following structure.

The number of phase elements in the embodiment is multiple. The multiple phase elements are connected in parallel. The controller is connected to each variable voltage source of each phase element, and is configured to control the voltage of each variable voltage source.

The output terminals of the ith bridge arms in all the phase elements are connected to one end of the ith-side port of the system, and the output terminals of the (N+1)th bridge arms in all the phase elements are connected to the other end of the ith-side port of the system, i=1,2,...,N.

A sum of the DC voltage components output by the variable voltage sources in the ith bridge arms and the (N+1)th bridge arms is the DC voltage of the ith-side port. The controller controls voltages of the variable voltage sources in the ith bridge arms and the (N+1)th bridge arms to regulate the DC voltage of the ith-side port.

All the bridge arms in each phase element form an AC circular current path, and the AC voltage components output by the variable voltage sources in the phase element are transmitted through the AC circular current path to implement energy exchange among the variable voltage sources. The controller controls the voltage of each variable voltage source to implement transmission of DC power and energy balance among the bridge arms. Herein, a phase angle difference of the AC voltage components output by the variable voltage sources in two adjacent phase elements is $2\pi/M$, M being the total number of the phase elements in the system. In the embodiment, energy balance among the bridge arms is implemented through the AC circular current paths, so that an isolated transformer in an auto-transformer based DC-MMC topology is eliminated.

In the embodiment, the system may flexibly configure the number of the phase elements, thereby meeting requirements of different high-voltage capacities. Meanwhile, the system may be applied to the field of high-voltage high-capacity DC power transmission with fewer power electronic devices, thereby reducing limits of inductive devices to DC power transmission of the DC-DC conversion system.

FIG. 6 is a third topological diagram of a DC-DC conversion system according to an embodiment of the invention. As shown in the figure, the system includes M phase elements, and each phase element includes three bridge arms.

The first bridge arm of the phase element 501 includes a variable voltage source 502 and an output terminal 505, the second bridge arm includes a variable voltage source 503 and an output terminal 506, and the third bridge arm includes a variable voltage source 504 and an output terminal 507. That is, the variable voltage source 502, the variable voltage source 503 and the variable voltage source 504 are in star connection and form a common terminal 508, a front end of the variable voltage source 502 is connected to the output terminal 505, a tail end is connected to the common terminal 508, a front end of the variable voltage source 503 is connected to the output terminal 506, a tail end is connected to the common terminal 508, a front end of the variable voltage source 504 is connected to the output terminal 507, and a tail end is connected to the common terminal 508.

In the embodiment, the three bridge arms of the phase element 501 form an AC circular current path, and AC voltage components output by the variable voltage source 502, the variable voltage source 503 and the variable voltage source 504 are transmitted through the AC circular current path to implement energy exchange among the variable voltage sources.

In the embodiment, each variable voltage source outputs an AC voltage component and a DC voltage component, so that the current of each arm may flow bidirectionally, thereby flexibly controlling the current direction of the DC-DC conversion system. In addition, in the embodiment, the number of the bridge arms in each phase element may be flexibly set, so that the DC-DC conversion system may meet application requirements of different voltage levels and multi-port DC-DC conversion system. The number of the phase elements may also be flexibly set, so that the DC-DC conversion system may meet application requirements of different capacities.

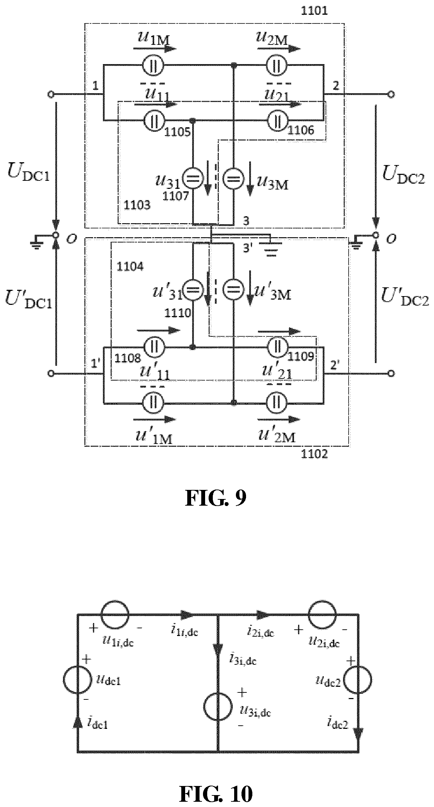

FIG. 9 is a topological diagram of a DC-DC conversion system according to an embodiment of the invention. As shown in the figure, the system includes M phase elements, and each phase element includes N+1 bridge arms.

Output terminals of ith bridge arms in the M phase elements are connected to one end of an ith-side port of the system, and output terminals of (N+1)th bridge arms in the M phase elements are connected to the other end of the ith-side port of the system, i=1,2,...,N.

In the embodiment, N+1 bridge arms of each phase element form an AC circular current path, and AC voltage components output by variable voltage sources in the phase element are transmitted through the AC circular current path to implement energy exchange among the variable voltage sources. As shown in the figure, AC voltage components output by a voltage source $u_{11}$, a voltage source $u_{21}$, a voltage source $u_{31}$, ......, a voltage source $u_{N1}$ are transmitted through an AC circular current path formed by N+1 bridge arms of the first phase element to implement energy exchange among the variable voltage sources. AC voltage components output by a voltage source $u_{1M}$, a voltage source $u_{2M}$, a voltage source $u_{3M}$, ....., a voltage source $u_{NM}$ are transmitted through an AC circular current path formed by N+1 bridge arms of the Mth phase element to implement energy exchange among the variable voltage sources.

In the embodiment, each variable voltage source outputs an AC voltage component and a DC voltage component, so that the current of each arm may flow bidirectionally, thereby flexibly controlling the current direction of the DC-DC conversion system. In addition, in the embodiment, the number of the phase elements may be flexibly set, so that the DC-DC conversion system may meet application requirements of different capacities.

Furthermore, the phase element in the embodiment further includes the following structure.

In the embodiment, the number of the phase elements is two, and the number of bridge arms of each of the phase elements is three.

The third bridge arms of the two phase elements are mutually connected and grounded. The first bridge arm of one phase element forms an input-side anode of the system, and its second bridge arm forms an output-side anode of the system. The first bridge arm of the other phase element forms an input-side cathode of the system, and its second bridge arm forms an output-side cathode of the system.

The controller controls the voltages of the variable voltage sources in the two first bridge arms and the two third bridge arms to regulate an input-side DC voltage of the system. The controller controls the voltages of the variable voltage sources in the two second bridge arms and the two third bridge arms to regulate an output-side DC voltage of the system.

All the bridges in each phase element form an AC circular current path, and the AC voltage components output by the variable voltage sources in the phase elements are transmitted through the AC circular current path to implement energy exchange among the variable voltage sources. The controller controls a voltage of each variable voltage source to implement transmission of DC power and energy balance between respective bridge arms. Herein, a phase angle difference of the AC voltage components output by the variable voltage sources in two adjacent phase elements is $2\pi$/M, M being the total number of the phase elements in the system. In the embodiment, energy balance among the bridge arms is implemented through the AC circular current paths, so that an isolated transformer in an auto-transformer based DC-MMC topology is eliminated.

FIG. 10 is a fifth topological diagram of a DC-DC conversion system according to an embodiment of the invention. As shown in the figure, in the embodiment, a phase element 1003, a first filter 1005 and a second filter 1006 form a DC-DC conversion subsystem 1001, and a phase element 1004, a first filter 1007 and a second filter 1008 form another DC-DC conversion subsystem 1002.

A first bridge arm of the phase element 1003 includes a variable voltage source 1009 and an output terminal, a second bridge arm includes a variable voltage source 1010 and an output terminal, and a third bridge arm includes a variable voltage source 1011 and an output terminal. The first filter 1005 is connected between the output terminal and the output terminal, and the second filter 1006 is connected between the output terminal and the output terminal.

A first bridge arm of the phase element 1004 includes a variable voltage source 1012 and an output terminal 1, a second bridge arm includes a variable voltage source 1013 and an output terminal 2, and a third bridge arm includes a variable voltage source 1014 and an output terminal 3. The first filter 1007 is connected between the output terminal 1 and the output terminal 3, and the second filter 1008 is connected between the output terminal 2 and the output terminal 3.

As shown in the figure, the output terminals of the third bridge arms in the DC-DC conversion subsystem 1001 and the DC-DC conversion subsystem 1002 are mutually connected and grounded. The output terminal of the first bridge in the DC-DC conversion subsystem 1001 forms an input-side anode of the system, and the output terminal of the second bridge arm forms an output-side anode of the system. The output terminal of the first bridge arm in the DC-DC conversion subsystem 1002 forms an input-side cathode of the system, and the output terminal of the second bridge arm forms an output-side cathode of the system.

In the embodiment, the two DC-DC conversion subsystems formed by the phase elements, the first filters and the second filters are constructed into a bipolar DC-DC conversion system capable of meeting requirements of different application scenarios.

Furthermore, the phase element in the embodiment further includes the following structure.

In the embodiment, multiple phase elements form a phase element group, the multiple phase elements are connected in parallel, and the number of bridge arms of each phase element is three. The DC-DC conversion system includes two phase element groups.

All third bridge arms of one phase element group and all third bridge arms of the other phase element group are mutually connected and grounded. All first bridge arms of the one phase element group are connected to an input-side anode of the system, and all second bridge arms are connected to an output-side anode of the system. All first bridge arms of the other phase element group are connected to an input-side cathode of the system, and all second bridge arms are connected to an output-side cathode of the system.

A controller controls voltages of variable voltage sources in all the first bridge arms and the third bridge arms to regulate an input-side DC voltage of the system. The controller controls voltages of variable voltage sources in all the second bridge arms and the third bridge arms to regulate an output-side DC voltage of the system.

All the bridge arms in each phase element form an AC circular current path, and AC voltage components output by the variable voltage sources in the phase element are transmitted through the AC circular current path to implement energy exchange among the variable voltage sources. The controller controls the voltage of each variable voltage source to implement transmission of DC power and energy balance among the bridge arms. Herein, a phase angle difference of the AC voltage components output by the variable voltage sources in two adjacent phase elements connected in parallel is $2\pi$/M, M being a total number of the phase elements in the system. In the embodiment, energy balance among the bridge arms is implemented through the AC circular current paths, so that an isolated transformer in a self-coupling DC-MMC topology is eliminated.

FIG. 9 is a sixth topological diagram of a bipolar DC-DC conversion system according to an embodiment of the invention. As shown in the figure, the system of the embodiment includes a phase element group 1101 and a phase element group 1102.

The phase element group 1101 includes multiple phase elements connected in parallel, each phase element includes three bridge arms in star connection, and each bridge arm includes a variable voltage source and an output terminal. As shown in the figure, the first bridge arm of the phase element 1103 includes a variable voltage source 1105 and an output terminal 1, the second bridge arm includes a variable voltage source 1106 and an output terminal 2, and the third bridge arm includes a variable voltage source 1107 and an output terminal 3.

The phase element group 1102 includes multiple phase elements which are connected in parallel, each phase element includes three bridge arms in star connection, and each bridge arm includes a variable voltage source and an output terminal. As shown in the figure, the first bridge arm of the phase element 1104 includes a variable voltage source 1108 and an output terminal 1, the second bridge arm includes a variable voltage source 1109 and an output terminal 2, and the third bridge arm includes a variable voltage source 1110 and an output terminal 3.

As shown in the figure, the output terminals of all the third bridge arms in the phase element group 1101 and the phase element group 1102 are mutually connected and grounded.

The output terminals of all the first bridge arms in the phase element group 1101 are connected to an input-side anode of the system, and the output terminals of all the second bridge arms are connected to an output-side anode of the system. The output terminals of all the first bridge arms in the phase element group 1102 are connected to an input-side cathode of the system, and the output terminals of all the second bridge arms are connected to an output-side cathode of the system.

In the embodiment, the two phase element groups are constructed into a bipolar DC-DC conversion system capable of meeting requirements of different application scenarios.

Furthermore, the variable voltage source in the embodiment includes the following structure.

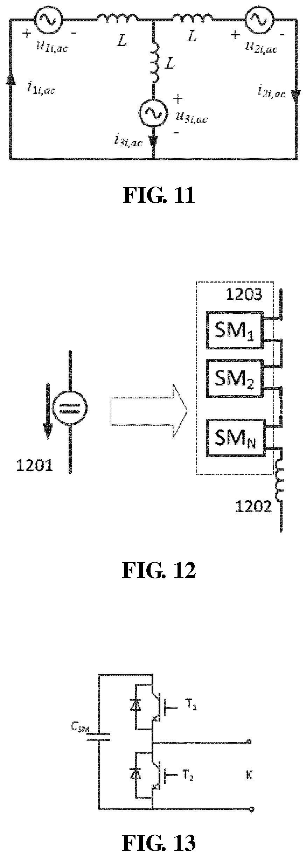

FIG. 12 is a topological diagram of a variable voltage source according to an embodiment of the invention. As shown in the figure, the variable voltage source 1201 in the embodiment includes an inductor 1202 and a power module unit 1203 connected in series. The power module unit 1203 includes multiple power submodules connected in series. The power submodules include a half-bridge type submodule, a full-bridge type submodule, a hybrid submodule, an asymmetric submodule, an interleaved submodule, a clamping submodule, a flying capacitor type submodule or a three-level submodule.

The multiple power submodules in the power module unit 1203 in the embodiment may adopt submodules with the same topological structure, and may also adopt submodules with multiple topological structures. For example, the power module unit 1203 may all adopt half-bridge type submodules, and may also simultaneously adopt other submodules, i.e. the half-bridge type module, the full-bridge type submodule and the hybrid submodule.

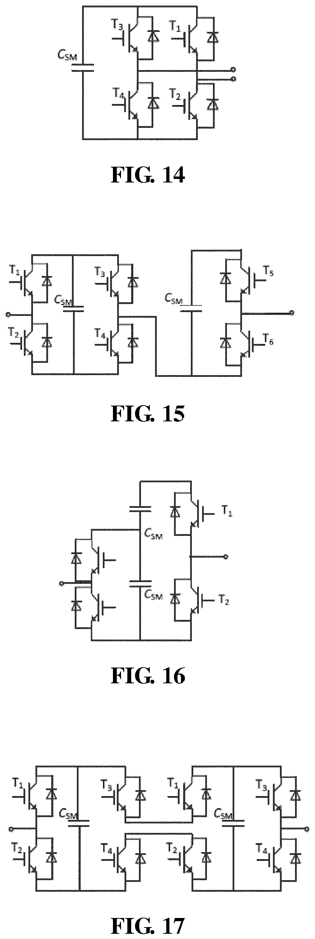

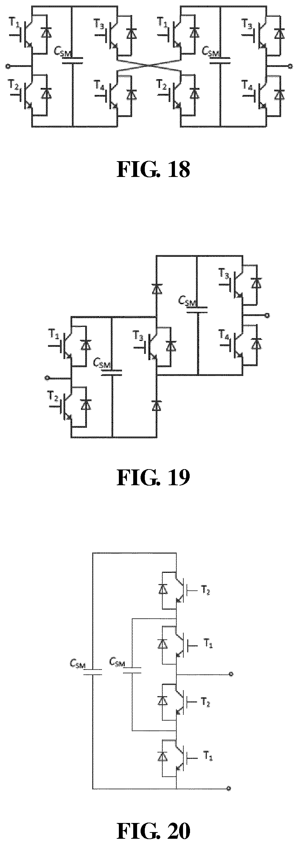

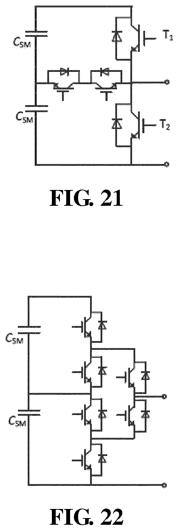

FIG. 13 shows a topological structure of the half-bridge type submodule. FIG. 14 shows a topological structure of the full-bridge type submodule. FIG. 17 and FIG. 18 show two topological structures of the interleaved submodule. FIG. 19 shows a topological structure of the clamping submodule. FIG. 20 shows a topological structure of the flying capacitor submodule. FIG. 21 and FIG. 22 show two topological diagrams of the three-level submodule.

FIG. 15 is a topological diagram of the hybrid submodule. As shown in the figure, the hybrid submodule includes a full-bridge structure formed by a power electronic device T1, a power electronic device T2, a power electronic device T3, a power electronic device T4 and a capacitor $C_{SM}$, and a half-bridge structure formed by a power electronic device T5, a power electronic device T6 and the capacitor $C_{SM}$.

FIG. 16 is a topological diagram of the asymmetric submodule. As shown in the figure, the asymmetric submodule includes a first branch circuit, a second branch circuit and a third branch circuit. The first branch circuit includes a power electronic device T1 and power electronic device T2 connected in series, the second branch circuit includes two capacitors connected in series, and the third branch circuit includes two power electronic devices connected in series. The first branch circuit is connected in parallel with the second branch circuit, and the third branch circuit is connected in parallel with one capacitor in the second branch circuit.

In the embodiment, the variable voltage source 1201 has high extensibility. That is, the number of the power submodules in the power module unit 1203 may be flexibly configured according to a voltage level of a DC system to meet requirements of different voltage transformation ratios.

An AC/DC working principle of the DC-DC conversion system in the embodiment of the invention will be described below in combination with the drawings.

1. The DC working principle

FIG. 10 is a diagram of a single-phase DC equivalent circuit of an M-phase two-port DC-DC system shown in FIG. 6 according to an embodiment of the invention. A voltage relationship shown in Formula (1) may be obtained according to KCL.

$$\begin{cases} u_{1j,dc} + u_{2j,dc} = u_{dc1} - u_{dc2} \\ u_{1j,dc} + u_{3j,dc} = u_{dc1} \quad j=1,2,\ldots M \\ u_{3j,dc} - u_{2j,dc} = u_{dc2} \end{cases} \quad (1),$$

where $u_{1j,dc}$ represents a DC voltage component of a variable voltage source 1 of a jth phase; $u_{2j,dc}$ represents a DC voltage component of a variable voltage source 2 of the jth phase; $u_{3j,dc}$ represents a DC voltage component of a controllable voltage source 3 of the jth phase; $u_{dc1}$ represents a DC voltage of a high-voltage side; and $u_{dc2}$ represents a DC voltage of a low-voltage side.

If a relationship between $u_{3j,dc}$ and $u_{dc2}$ is as follows:

$$u_{3j,dc} = k \cdot u_{dc2} \quad (2),$$

DC voltage components of the variable voltage sources 1 and 2 may be represented as follows:

$$\begin{cases} u_{2j,dc} = (k-1)u_{dc2} \\ u_{1j,dc} = (r-k)u_{dc2} \end{cases} ; r = \frac{u_{dc1}}{u_{dc2}} \quad (3),$$

where r represents a voltage transformation ratio.

A voltage relationship shown in Formula (4) may be obtained by the KCL.

$$\begin{cases} i_{2j,dc} = \dfrac{i_{dc2}}{M} \\ i_{1j,dc} = \dfrac{i_{dc1}}{M} = \dfrac{i_{dc2}}{r \cdot M} \\ i_{3j,dc} = i_{1j,dc} - i_{2j,dc} = \left(\dfrac{1}{r} - 1\right) i_{dc2} / M \end{cases} \quad (4),$$

where $i_{1j,dc}$ represents a DC component the variable voltage source 1 of the jth phase; $i_{2j,dc}$ represents a DC component of the variable voltage source 2 of the jth phase; $i_{3j,dc}$ represents a DC component of the variable voltage source 3 of the jth phase; $i_{dc1}$ represents a DC of the high-voltage side; $i_{dc2}$ represents a DC of the low-voltage side; and M represents the number of phase elements.

DC power of respective bridge arms may be calculated by Formulae (2), (3) and (4), represented as follows:

$$\begin{cases} P_{1j,dc} = u_{1j,dc} \cdot i_{1j,dc} = \left(1 - \dfrac{k}{r}\right) \dfrac{P}{M} \\ P_{2j,dc} = u_{2j,dc} \cdot i_{2j,dc} = \left(1 - \dfrac{k}{r}\right) \dfrac{P}{M} \\ P_{3j,dc} = u_{3j,dc} \cdot i_{3j,dc} = \left(1 - \dfrac{k}{r}\right) \dfrac{P}{M} \end{cases} \quad (5),$$

where P is active power transmitted by a converter, and a direction in which energy is transmitted from the high-voltage side to the low-voltage side is positive.

2. The AC working principle

FIG. 11 is a diagram of a single-phase AC equivalent circuit of an M-phase two-port DC-DC system shown in FIG. 6 according to an embodiment of the invention. An AC relationship of respective bridge arms may be calculated according to a node voltage method, as shown in Formula (6).

$$
\begin{cases}
I_{1j,ac} = \dfrac{-2U_{1j,ac} - U_{2j,ac} - U_{3j,ac}}{j(3\omega L)} \\[2ex]
I_{2j,ac} = \dfrac{-U_{1j,ac} - U_{2j,ac} + U_{3j,ac}}{j(3\omega L)} \\[2ex]
I_{3j,ac} = \dfrac{-U_{1j,ac} + U_{2j,ac} - 2U_{3j,ac}}{j(3\omega L)}
\end{cases}
\quad (6),
$$

where $I_{1j,ac}$, $I_{2j,ac}$ and $I_{3j,ac}$ represent current phases of the variable voltage sources 1, 2 and 3 of the jth phase; and $U_{1j,ac}$, $U_{2j,ac}$ and $U_{3j,ac}$ represent voltage phases of the variable voltage sources 1, 2 and 3 of the jth phase.

Furthermore, active power absorbed by AC components of the variable voltage sources may be represented as follows:

$$
\begin{cases}
P_{1j,ac} = \dfrac{U_{1j,ac}U_{2j,ac}\sin(\theta_1 - \theta_2) + U_{1j,ac}U_{3j,ac}\sin(\theta_1 - \theta_3)}{3\omega L} \\[2ex]
P_{2j,ac} = \dfrac{U_{2j,ac}U_{1j,ac}\sin(\theta_2 - \theta_1) - U_{2j,ac}U_{3j,ac}\sin(\theta_2 - \theta_3)}{3\omega L} \\[2ex]
P_{3j,ac} = \dfrac{U_{3j,ac}U_{1j,ac}\sin(\theta_3 - \theta_1) - U_{3j,ac}U_{2j,ac}\sin(\theta_3 - \theta_2)}{3\omega L}
\end{cases}
\quad (7),
$$

where $\theta_1$, $\theta_2$ and $\theta_3$ represent initial phase angles of voltage phases of bridge arms of the variable voltage sources 1, 2 and 3.

In order to ensure normal running of a converter, it is required to ensure balance of energy absorbed by each variable voltage source. On the premise of ignoring loss of the conversion system, it is only required to ensure that the DC power absorbed by each variable voltage source and AC active power sent out are equal in magnitude. The following expression is obtained by Formulae (5) and (7):

$$
\begin{cases}
\left(1 - \dfrac{k}{r}\right)\dfrac{P}{M} = -\dfrac{U_{1j,ac}U_{2j,ac}\sin(\theta_1 - \theta_2) + U_{1j,ac}U_{3j,ac}\sin(\theta_1 - \theta_3)}{3\omega L} \\[2ex]
(k - 1)\dfrac{P}{M} = -\dfrac{U_{2j,ac}U_{1j,ac}\sin(\theta_2 - \theta_1) - U_{2j,ac}U_{3j,ac}\sin(\theta_2 - \theta_3)}{3\omega L} \\[2ex]
\left(\dfrac{k}{r} - k\right)\dfrac{P}{M} = -\dfrac{U_{3j,ac}U_{1j,ac}\sin(\theta_3 - \theta_1) - U_{3j,ac}U_{2j,ac}\sin(\theta_3 - \theta_2)}{3\omega L}
\end{cases}
\quad (8)
$$

From the above analysis, it can be seen that, each variable voltage source outputs a DC voltage component and an AC component voltage, so that currents in the variable voltage sources contain DCs and ACs, and the currents of the variable voltage sources may have positive and negative directions; DC energy and AC energy absorbed by each variable voltage source may be complemented to implement energy balance of the currents of the variable voltage sources; and an internal circular current only circulates in the DC-DC conversion system, and an AC harmonic circular current may not flow out of the DC-DC system, so that a larger inductance filtering device on the output side of the DC-DC system is eliminated.

The invention further provides a control method for a DC-DC conversion system, and a specific embodiment is provided.

In the embodiment, the DC-DC system includes a phase element. The phase element includes multiple bridge arms in star connection. Each bridge arm includes a variable voltage source and an output terminal. The multiple variable voltage sources are in star connection and form a common terminal, and the other ends are output terminals. Each variable voltage source includes a DC voltage component and an AC voltage component. The output terminal of the ith bridge arm and output terminal of the (N+1)th bridge arm of the phase element form an ith-side port of the system, i=1,2,...,N. The DC-DC conversion system may be controlled by adopting the following implementation steps, specifically as follows.

1. The ith-side port is determined as an input side of the system

The variable voltage sources in both the ith bridge arm and the (N+1)th bridge arm are controlled to output fixed DC voltage components, and a sum of the two DC voltage components is determined as an input-side DC voltage of the system.

2. The ith-side port is determined as an output side of the system

The variable voltage sources in the ith bridge arm and the (N+1)th bridge arm are controlled to output DC voltage components, and a sum of the two DC voltage components is determined as an output-side DC voltage of the system.

The DC voltage component output by the variable voltage source in the (N+1)th bridge arm is a fixed value, and the DC voltage component output by the variable voltage source in the ith bridge arm is regulated to change a magnitude of the output-side DC voltage. That is, when a required DC voltage output by the DC-DC conversion system changes, a magnitude of the DC voltage component output by the variable voltage source in the ith bridge arm is regulated to further regulate a magnitude of the sum of the DC voltage components in the two bridge arms, so that the DC voltage output by the DC-DC conversion system may meet a requirement of a load.

A phase and amplitude of each AC voltage component output by each variable voltage source are controlled, and energy balance is performed on N+1 bridge arms. That is, energy transmission among the N+1 bridge arms is implemented to achieve a purpose of energy balance among the bridge arms.

In the embodiment, each variable voltage source in each bridge arm on the input side of the system is controlled to output the fixed DC voltage component, thereby keeping the input-side DC voltage of the system constant. Each variable voltage source in each bridge arm on the output side of the system is controlled to output the DC voltage component to meet DC voltage values required by different practical working conditions, and the system is easy to operate.

**Claims**

1. A bidirectional Direct Current, DC, -DC conversion system (801), comprising a phase element and a controller (407), wherein

   the phase element comprises N+1 bridge arms, each of the bridge arms comprises a variable voltage source ($u_{11}$, $u_{21}$, $u_{31}$, $u_{N1}$) and an output terminal (408, 409, 410), the variable voltage sources ($u_{11}$, $u_{21}$, $u_{31}$, $u_{N1}$) of the N+1 bridge arms are in star connection and form a common terminal (411),
   **characterized in that**
   the output terminal of the ith bridge arm (408, 409) and the output terminal of the (N+1)th bridge arm (410) form an ith-side port of the system; and
   a sum of DC voltage components output by the variable voltage sources of the ith bridge arm and the (N+1)th bridge arm is a DC voltage of the ith-side port; and
   the controller (407) is connected to each of the variable voltage sources, ($u_{11}$, $u_{21}$, $u_{31}$, $u_{N1}$) and is configured to control a voltage of each of the variable voltage sources.

2. The DC-DC conversion system according to claim 1, further comprising a filter, wherein
   the filter (405, 406) is connected between the output terminal of the ith bridge arm (408, 409) and the output terminal of the (N+1)th bridge arm (410) in the phase element, i=1,2,...,N.

3. The DC-DC conversion system according to claim 2, wherein

the phase element and the filter form an Alternating Current, AC, circular current path;
each of the variable voltage sources in the phase element outputs each of AC voltage component, and energy exchange among the variable voltage sources is implemented through the AC circular current path; and
the controller controls the DC voltage component of each of the variable voltage sources to implement transmission of DC power, and controls the AC voltage component of each of the variable voltage sources to implement energy balance among the bridge arms.

4. The DC-DC conversion system according to claim 1, wherein there are a plurality of phase elements which are the same, and the plurality of phase elements are connected in parallel; and
the controller is connected to each of the variable voltage sources of each of the phase elements, and is configured to control a voltage of each of the variable voltage sources.

5. The DC-DC conversion system according to claim 4, wherein

the output terminals of the ith bridge arms in all the phase elements are connected to one end of an ith-side port in the system, and the output terminals of the (N+1)th bridge arms in all the phase elements are connected to the other end of the ith-side port, i=1,2,...N; and
a sum of the DC voltage components output by the variable voltage sources in the ith bridge arms and the (N+1)th bridge arms is a DC voltage of the ith-side port.

6. The DC-DC conversion system according to claim 4, wherein

all the bridge arms of each of the phase elements form an AC circular current path, each of the variable voltage sources in the phase element outputs each of AC voltage components, and energy exchange among the variable voltage sources is implemented through the AC circular current path;
a phase angle difference of the AC voltage components output by the variable voltage sources in two adjacent phase elements connected in parallel is $2\pi/M$, M being a total number of the phase elements in the system; and
the controller (407) controls the DC voltage component of each of the variable voltage sources to implement transmission of the DC power, and controls the AC voltage component of each of the variable voltage sources to implement energy balance among the bridge arms.

7. The DC-DC conversion system according to any one of claims 1-3, wherein the number of the phase elements is two, and the number of the bridge arms of each of the phase elements is three;

third bridge arms of the two phase elements are mutually connected and grounded;
a first bridge arm of one phase element forms an input-side anode of the system, and a second bridge arm thereof forms an output-side anode of the system; and
a first bridge arm of the other phase element forms an input-side cathode of the system, and a second bridge arm thereof forms an output-side cathode of the system.

8. The DC-DC conversion system according to any one of claims 4-6, wherein the plurality of phase elements form a phase element group, and the number of the bridge arms of each of the phase elements is three; the system comprises two phase element groups;

all third bridge arms of one phase element group and all third bridge arms of the other phase element group are mutually connected and grounded;
all first bridge arms of the one phase element group are connected to an input-side anode of the system, and all second bridge arms thereof are connected to an output-side anode of the system; and
all first bridge arms of the other phase element group are connected to an input-side cathode of the system, and all second bridge arms thereof are connected to an output-side cathode of the system.

9. The DC-DC conversion system according to any one of claims 1-6, wherein each of the variable voltage sources comprises an inductor and a power module unit connected in series; the power module unit comprises multiple power submodules connected in series; and
the power submodules comprise a half-bridge type submodule, a full-bridge type submodule, a hybrid submodule, an asymmetric submodule, an interleaved submodule, a clamping submodule, a flying capacitor type submodule or a three-level submodule.

**10.** A control method for a bidirectional Direct Current, DC,-DC conversion system, wherein the DC-DC conversion system comprises a phase element; the phase element comprises N+1 bridge arms, and each of the bridge arms comprises a variable voltage source ($u_{11}$, $u_{21}$, $u_{31}$, $u_{N1}$) and an output terminal (408, 409, 410); the variable voltage sources of the N+1 bridge arms are in star connection and form a common terminal (411); **characterized in that** the output terminal (408, 409) of an ith bridge arm and the output terminal (410) of a (N+1)th bridge arm of the phase element form an ith-side port of the system, i=1,2,...,N;

a sum of DC voltage components output by the variable voltage sources of the ith bridge arm and the (N+1)th bridge arm is a DC voltage of the ith-side port;

the variable voltage sources output DC voltage components and Alternating Current, AC, voltage components, and the control method comprises:

when the ith-side port is determined as an input side of the system, controlling the variable voltage sources in both the ith bridge arm and the (N+1)th bridge arm to output fixed DC voltage components, and determining a sum of the two DC voltage components as an input-side DC voltage of the system;

when the ith-side port is determined as an output side of the system, controlling the variable voltage sources in the ith bridge arm and the (N+1)th bridge arm to output DC voltage components, and determining a sum of the two DC voltage components as an output-side DC voltage of the system, wherein the DC voltage component output by the variable voltage source in the (N+1)th bridge arm is a fixed value, and the DC voltage component output by the variable voltage source in the ith bridge arm is regulated to change a magnitude of the output-side DC voltage; and

controlling a phase and amplitude of each of the AC voltage components output by each of the variable voltage sources so as to perform energy balance on N+1 bridge arms.

**Patentansprüche**

**1.** Bidirektionales Gleichstrom(DC)-DC-Umwandlungssystem (801), umfassend ein Phasenelement und eine Steuerung (407), wobei

das Phasenelement N+1-Brückenarme umfasst, jeder der Brückenarme eine variable Spannungsquelle ($u_{11}$, $u_{21}$, $u_{31}$, $u_{N1}$) und eine Ausgangsklemme (408, 409, 410) umfasst, die variablen Spannungsquellen ($u_{11}$, $u_{21}$, $u_{31}$, $u_{N1}$) der N+1-Brückenarme in Sternschaltung sind und einen gemeinsamen Anschluss (411) bilden, **dadurch gekennzeichnet, dass** die Ausgangsklemme des i-ten Brückenarms (408, 409) und die Ausgangsklemme des (N+1)-ten Brückenarms (410) einen i-ten Seitenanschluss des Systems bilden; und

eine Summe von DC-Spannungskomponenten, die von den variablen Spannungsquellen des i-ten Brückenarms und des (N+1)-ten Brückenarms ausgegeben werden, eine DC-Spannung des i-ten Seitenanschlusses ist; und die Steuerung (407) an jede der variablen Spannungsquellen ($u_{11}$, $u_{21}$, $u_{31}$, $u_{N1}$) angeschlossen und konfiguriert ist, um eine Spannung jeder der variablen Spannungsquellen zu steuern.

**2.** DC-DC-Umwandlungssystem nach Anspruch 1, ferner umfassend einen Filter, wobei der Filter (405, 406) zwischen der Ausgangsklemme des i-ten Brückenarms (408, 409) und der Ausgangsklemme des (N+1)-ten Brückenarms (410) im Phasenelement i=1,2,...,N. angeschlossen ist.

**3.** DC-DC-Umwandlungssystem nach Anspruch 2, wobei

das Phasenelement und der Filter einen Wechselstrom-(AC)Kreisstrompfad bilden;

jede der variablen Spannungsquellen in dem Phasenelement jede der AC-Spannungskomponente ausgibt, und der Energieaustausch zwischen den variablen Spannungsquellen über den AC-Kreisstrompfad implementiert wird; und

die Steuerung die DC-Spannungskomponente jeder der variablen Spannungsquellen steuert, um die Übertragung von DC-Strom zu implementieren, und die AC-Spannungskomponente jeder der variablen Spannungsquellen steuert, um die Energiebilanz zwischen den Brückenarmen zu implementieren.

**4.** DC-DC-Umwandlungssystem nach Anspruch 1, wobei es mehrere Phasenelemente gibt, die gleich sind, und die mehreren Phasenelemente parallel angeschlossen sind; und

die Steuerung an jede der variablen Spannungsquellen jedes der Phasenelemente angeschlossen und so konfiguriert ist, dass sie eine Spannung jeder der variablen Spannungsquellen steuert.

**5.** DC-DC-Umwandlungssystem nach Anspruch 4, wobei

die Ausgangsklemmen der i-ten Brückenarme in allen Phasenelementen an ein Ende eines i-ten Seitenanschlusses im System angeschlossen sind, und die Ausgangsklemmen der (N+1)-ten Brückenarme in allen Phasenelementen an das andere Ende des i-ten Seitenanschlusses, i=1,2,...N angeschlossen sind; und

eine Summe der DC-Spannungskomponenten, die von den variablen Spannungsquellen in den i-ten Brückenarmen und den (N+1)-ten Brückenarmen ausgegeben werden, eine DC-Spannung des i-ten Seitenanschlusses ist.

6. DC-DC-Umwandlungssystem nach Anspruch 4, wobei
alle Brückenarme jedes der Phasenelemente einen AC-Kreisstrompfad bilden, jede der variablen Spannungsquellen im Phasenelement jede der AC-Spannungskomponenten ausgibt, und der Energieaustausch zwischen den variablen Spannungsquellen über den AC-Kreisstrompfad implementiert wird; eine Phasenwinkeldifferenz der AC-Spannungskomponenten, die von den variablen Spannungsquellen in zwei benachbarten Phasenelementen ausgegeben werden, die parallel angeschlossen sind, 2 $\pi$ /M beträgt, wobei M eine Gesamtzahl der Phasenelemente in dem System ist; und

die Steuerung (407) die DC-Spannungskomponente jeder der variablen Spannungsquellen steuert, um die Übertragung des DC-Stroms zu implementieren, und die AC-Spannungskomponente jeder der variablen Spannungsquellen steuert, um die Energiebilanz zwischen den Brückenarmen zu implementieren.

7. DC-DC-Umwandlungssystem nach einem der Ansprüche 1 bis 3, wobei die Anzahl der Phasenelemente zwei und die Anzahl der Brückenarme jedes der Phasenelemente drei beträgt;
dritte Brückenarme der beiden Phasenelemente aneinander angeschlossen und geerdet sind;

ein erster Brückenarm eines Phasenelements eine eingangsseitige Anode des Systems bildet, und ein zweiter Brückenarm davon eine ausgangsseitige Anode des Systems bildet; und

ein erster Brückenarm des anderen Phasenelements eine eingangsseitige Kathode des Systems bildet, und ein zweiter Brückenarm davon eine ausgangsseitige Kathode des Systems bildet.

8. DC-DC-Umwandlungssystem nach einem der Ansprüche 4 bis 6, wobei die mehreren Phasenelemente eine Phasenelementgruppe bilden und die Anzahl der Brückenarme jedes der Phasenelemente drei beträgt; das System zwei Phasenelementgruppen umfasst;
alle dritten Brückenarme einer Phasenelementgruppe und alle dritten Brückenarme der anderen Phasenelementgruppe aneinander angeschlossen und geerdet sind;

alle ersten Brückenarme der einphasigen Elementgruppe an eine eingangsseitige Anode des Systems angeschlossen sind, und alle zweiten Brückenarme davon an eine ausgangsseitige Anode des Systems angeschlossen sind; und

alle ersten Brückenarme der anderen Phasenelementgruppe an eine eingangsseitige Kathode des Systems angeschlossen sind, und alle zweiten Brückenarme davon an eine ausgangsseitige Kathode des Systems angeschlossen sind.

9. DC-DC-Umwandlungssystem nach einem der Ansprüche 1 bis 6, wobei jede der variablen Spannungsquellen eine Induktorspule und eine Leistungsmoduleinheit umfasst, die in Reihe angeschlossen sind; die Leistungsmoduleinheit mehrere in Reihe angeschlossene Leistungsteilmodule umfasst; und
die Leistungsteilmodule ein Halbbrücken-Teilmodul, ein Vollbrücken-Teilmodul, ein Hybrid-Teilmodul, ein asymmetrisches Teilmodul, ein verschachteltes Teilmodul, ein Klemm-Teilmodul, ein fliegendes Kondensator-Teilmodul oder ein dreistufiges Teilmodul umfassen.

10. Steuerverfahren für ein bidirektionales Gleichstrom(DC)-DC-Umwandlungssystem, wobei das DC-DC-Umwandlungssystem ein Phasenelement umfasst; das Phasenelement N+1-Brückenarme umfasst und jeder der Brückenarme eine variable Spannungsquelle (u11, u21, u31, uN1) und einen Ausgangsanschluss (408, 409, 410) umfasst; die variablen Spannungsquellen der N+1-Brückenarme in Sternschaltung sind und eine gemeinsamen Klemme (411) bilden;
**dadurch gekennzeichnet, dass** die Ausgangsklemme (408, 409) eines i-ten Brückenarms und die Ausgangsklemme (410) eines (N+1)-ten Brückenarms des Phasenelements einen i-ten Seitenanschluss des Systems, i= 1,2,...,N bilden;

eine Summe von DC-Spannungskomponenten, die von den variablen Spannungsquellen des i-ten Brückenarms und des (N+1)-ten Brückenarms ausgegeben werden, eine DC-Spannung des i-ten Seitenanschlusses ist;

die variablen Spannungsquellen DC-Spannungskomponenten und Wechselstrom(AC)-Spannungskomponenten ausgeben, und das Steuerverfahren umfasst:

wenn der i-te Seitenanschluss als Eingangsseite des Systems bestimmt wird, Steuern der variablen Spannungsquellen sowohl im i-ten Brückenarm als auch im (N+1)-ten Brückenarm, um feste DC-Spannungskomponenten auszugeben, und Bestimmen einer Summe der zwei DC-Spannungskomponenten als eingangsseitige DC-Spannung des Systems;

wenn der i-te Seitenanschluss als Ausgangsseite des Systems bestimmt wird, Steuern der variablen Spannungsquellen im i-ten Brückenarm und im (N+1)-ten Brückenarm, um DC-Spannungskomponenten auszugeben, und

Bestimmen einer Summe der beiden DC-Spannungskomponenten als ausgangsseitige DC-Spannung des Systems, wobei die von der variablen Spannungsquelle im (N+1)-ten Brückenarm ausgegebene DC-Spannungskomponente ein fester Wert ist und die von der variablen Spannungsquelle ausgegebene DC-Spannungskomponente im i-ten Brückenarm geregelt wird, um eine Größe der ausgangsseitigen DC-Spannung zu ändern; und Steuern einer Phase und Amplitude jeder der AC-Spannungskomponenten, die von jeder der variablen Spannungsquellen ausgegeben werden, um eine Energiebilanz an N+1-Brückenarmen durchzuführen.

**Revendications**

1. Système de conversion bidirectionnel de Courant Continu, CC, en CC (801), comprenant un élément de phase et un contrôleur (407), dans lequel

   l'élément de phase comprend N+1 bras de pont, chacun des bras de pont comprend une source de tension variable ($u_{11}$, $u_{21}$, $u_{31}$, $u_{N1}$) et une borne de sortie (408, 409, 410), les sources de tension variable ($u_{11}$, $u_{21}$, $u_{31}$, $u_{N1}$) des N+1 bras de pont sont en étoile et forment une borne commune (411),

   **caractérisé en ce que**

   la borne de sortie du ième bras de pont (408, 409) et la borne de sortie du (N+1)ème bras de pont (410) forment un port du côté i du système ; et

   une somme de composantes de tension continue délivrés par les sources de tension variables du ième bras de pont et du (N+1)ème bras de pont est une tension continue du port du côté ième ;

   le contrôleur (407) est connecté à chacune des sources de tension variable ($u_{11}$, $u_{21}$, $u_{31}$, $u_{N1}$), et est configuré pour contrôler une tension de chacune des sources de tension variable.

2. Système de conversion CC-CC selon la revendication 1, comprenant en outre un filtre,

   dans lequel le filtre (405, 406) est connecté entre la borne de sortie du ième bras de pont (408, 409) et la borne de sortie du (N+1)ème bras de pont i (410) dans l'élément de phase,

   i = 1,2, ..., N.

3. Système de conversion CC-CC selon la revendication 2, dans lequel

   l'élément de phase et le filtre forment un chemin de courant circulaire, à courant alternatif, CA ;

   chacune des sources de tension variable dans l'élément de phase sort chacune de la composante de tension alternative, et l'échange d'énergie entre les sources de tension variable est mis en œuvre par le chemin de courant circulaire alternatif ; et

   le contrôleur commande la composante de tension continue de chacune des sources de tension variable pour mettre en œuvre la transmission de l'énergie en courant continue, et contrôle la composante de tension alternative de chacune des sources de tension variable pour mettre en œuvre l'équilibre énergétique entre les bras de pont.

4. Système de conversion CC-CC selon la revendication 1, dans lequel il existe une pluralité d'éléments de phase qui sont les mêmes, et la pluralité d'éléments de phase sont connectés en parallèle ; et

   le contrôleur est connecté à chacune des sources de tension variable de chacun des éléments de phase, et est configuré pour contrôler une tension de chacune des sources de tension variable.

5. Système de conversion CC-CC selon la revendication 4, dans lequel

   les bornes de sortie des ième bras de pont dans tous les éléments de phase sont connectées à une extrémité d'un port du ième côté du système, et les bornes de sortie des (N+1)ème bras de pont de tous les éléments de phase sont connectés à l'autre extrémité du port du côté i, i = 1,2, ... N ; et

   une somme des composantes de tension continue délivrées par les sources de tension variables dans les ième bras de pont et les (N+1)èmes bras de pont est une tension continue du port du côté i.

6. Système de conversion CC-CC selon la revendication 4, dans lequel

   tous les bras de pont de chacun des éléments de phase forment un chemin de courant circulaire en CA, chacune des sources de tension variable dans l'élément de phase sort chacune des composantes de tension CA, et l'échange d'énergie entre les sources de tension variable est mis en œuvre par le chemin de courant circulaire CA ;

   une différence d'angle de phase des composantes de tension alternative délivrés par les sources de tension variables dans deux éléments de phase adjacents connectés en parallèle est de 2π/M, M étant un nombre total des éléments de phase dans le système ; et

le contrôleur (407) contrôle la composante de tension continue de chacune des sources de tension variable pour mettre en œuvre la transmission de la puissance en courant continue, et contrôle la composante de tension alternative de chacune des sources de tension variable pour mettre en œuvre l'équilibre énergétique entre les bras de pont.

7. Système de conversion CC-CC selon l'une quelconque des revendications 1 à 3, dans lequel le nombre des éléments de phase est de deux, et le nombre des bras de pont de chacun des éléments de phase est de trois ;

des troisièmes bras de pont des deux éléments de phasé sont mutuellement connectés et mis à la terre ;

un premier bras de pont d'un élément de phase forme une anode du côté entrée du système, et un second bras de pont de celui-ci forme une anode côté sortie du système ; et

un premier bras de pont de l'autre élément de phase forme une cathode côté entrée du système, et un second bras de pont de celui-ci forme une cathode côté sortie du système.

8. Système de conversion CC-CC selon l'une quelconque des revendications 4 à 6, dans lequel la pluralité d'éléments de phase forment un groupe d'éléments de phase, et le nombre de bras de pont de chacun des éléments de phase est de trois ; le système comprend deux groupes d'éléments de phase ;

tous les troisièmes bras de pont d'un groupe d'éléments de phase et tous les troisièmes bras de pont de l'autre groupe d'éléments de phase sont mutuellement connectés et mis à la terre ;

tous les premiers bras de pont du groupe d'éléments monophasés sont connectés à une anode côté entrée du système, et tous les seconds bras de pont de celui-ci sont connectés à une anode côté sortie du système ; et

tous les premiers bras de pont de l'autre groupe d'éléments de phase sont connectés à une cathode côté entrée du système, et tous les seconds bras de pont de celui-ci sont connectés à une cathode côté sortie du système.

9. Système de conversion CC-CC selon l'une quelconque des revendications 1 à 6, dans lequel chacune des sources de tension variable comprend une inductance et un module de puissance connectés en série ; le module de puissance comprend plusieurs sous-modules de puissance connectés en série ; et

les sous-modules de puissance comprennent un sous-module de type demi-pont, un sous-module de type pont complet, un sous-module hybride, un sous-module asymétrique, un sous-module entrelacé, un sous-module d'écrêtage, un sous-module de type condensateur volant ou un sous-module à trois niveaux.

10. Procédé de commande pour un système de conversion bidirectionnel en courant continu, CC, en CC, dans lequel le système de conversion CC-CC comprend un élément de phase ; l'élément de phase comprend N+1 bras de pont, et chacun des bras de pont comprend une source de tension variable ($u_{11}$, $u_{21}$, $u_{31}$, $u_{N1}$)

et une borne de sortie (408, 409, 410) ; les sources de tension variable des N+1 bras de pont sont connectées en étoile et forment une borne commune (411) ;

**caractérisé en ce que**

la borne de sortie (408, 409) d'un ième bras de pont et la borne de sortie (410) d'un (N+1)ème bras de pont de l'élément de phase forment un port du côté i du système, i = 1, 2, ..., N ;

une somme des composantes de tension continue délivrés par les sources de tension variables du ième bras de pont et du (N+1)ème bras de pont est une tension continue du port du côté i ;

les sources de tension variable produisent des composantes de tension continue et des composantes de courant alternatif, CA, et le procédé de commande comprend :

lorsque le port du côté i est déterminé comme côté d'entrée du système, l'étape consistant à contrôler des sources de tension variables à la fois dans l'ième bras du pont et dans le (N+1)ème bras de pont pour produire en sortie des composantes de tension CC fixes, et l'étape consistant à déterminer une somme des deux composantes de tension CC comme tension CC côté entrée du système ;

lorsque le port du côté i est déterminé comme un côté sortie du système, l'étape consistant à contrôler les sources de tension variable à la fois dans le ième bras de pont et le (N+1)ème bras de pont pour produire en sortie des composante de tension continue, et l'étape consistant à déterminer une somme des deux composantes de tension continue en tant que tension continue côté sortie du système, où la composante de tension continue sortie par la source de tension variable dans le (N+1)ème bras de pont est une valeur fixe, et la composante de tension continue sortie par la source de tension variable dans le ième bras de pont est régulée pour changer une amplitude de la tension continue côté sortie ; et

l'étape consistant à contrôler une phase et une amplitude de chacune des composantes de tension alternative délivrées par chacune des sources de tension variable de manière à effectuer un équilibre énergétique sur N+1 bras de pont.

**FIG. 1**

**FIG. 2**

**FIG. 3**

**FIG. 4**

**FIG. 5**

**FIG. 6**

**FIG. 7**

**FIG. 8**

**FIG. 9**

**FIG. 10**

**FIG. 11**

**FIG. 12**

**FIG. 13**

**FIG. 14**

**FIG. 15**

**FIG. 16**

**FIG. 17**

**FIG. 18**

**FIG. 19**

**FIG. 20**

**FIG. 21**

**FIG. 22**

**EP 3 393 030 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013017160 A1

- WO 2016029824 A1